# EUROPÄISCHE PATENTANMELDUNG

(11) **EP 0 766 484 A2**
(43) Veröffentlichungstag der Anmeldung: **02.04.1997**
(21) Anmeldenummer: 96114423.5
(22) Anmeldetag: 10.09.1996
(51) Int. Cl.: H04Q 1/14

(54) **Anschlusseinrichtung für die Fernmelde- und Datentechnik**

(30) Priorität: 29.09.1995 DE 19537528
(71) Anmelder: KRONE Aktiengesellschaft, D-14167 Berlin (DE)
(72) Erfinder: Gerke, Dieter, 13509 Berlin (DE); Müller, Manfred, 13156 Berlin (DE)

(57) **Zusammenfassung**

Die Erfindung betrifft eine Anschlußeinrichtung für die Fernmelde- und Datentechnik, bestehend aus der Tragschiene, dem Basiselement mit Aufnahmeöffnung und aus Funktionsbausteinen.

Die Aufgabe der Erfindung, eine modulare Anschlußeinrichtung der gattungsgemäßen Art zu entwickeln, mit der in einfacher Weise unterschiedliche Anschlußaufgaben gelöst werden können, wird dadurch gelöst, daß das auf die Tragschiene 2 aufrastbare Basiselement 1 Aufnahmen 8,9 für ein Anschlußelement 4 für ankommende Kabel und für ein Anschlußelement 3 für abgehende Kabel aufweist und daß sich zwischen beiden Anschlußelementen 3,4 ein Funktionsbaustein 5 befindet.

## Beschreibung

Die Erfindung bezieht sich auf eine Anschlußeinrichtung für die Fernmelde- und Datentechnik gemäß dem Oberbegriff des Anspruches 1.

Aus der DE 37 38 322 C2 ist eine Anschlußleiste bekannt, die aus einem Basiselement besteht, welches über federnde Rastelemente auf einer Tragschiene angeordnet ist. In dem Basiselement ist eine Aufnahmeöffnung für ein Verbinderelement vorgesehen.

Ziel dieser beschriebenen Konstruktion ist es, Erweiterungs- und Verkleinerungsmöglichkeiten für Anschlußleisten zu schaffen, ohne die elektrischen Verbindungen zwischen den Teilleisten zu verschlechtern. Die Anschlußleisten ermöglichen jedoch nicht, verschiedene Anschlußmöglichkeiten aus Funktionsbausteinen zu kombinieren, z.B. dicke und dünne Kabeladern in einem Anschluß zu realisieren oder unterschiedliche Schutzschaltungen anzuwenden.

Der Erfindung liegt von daher die Aufgabe zugrunde, eine modulare Anschlußeinrichtung der gattungsgemäßen Art zu entwickeln, mit der in einfacher Weise unterschiedliche Anschlußaufgaben gelöst werden können.

Die Lösung dieser Aufgabe ergibt sich aus den kennzeichnenden Merkmalen des Anspruches 1.

Der modulare Aufbau der Anschlußeinrichtung aus den Funktionselementen Basiselement, Anschlußelemente, Funktionsbaustein, und deren Aufrastung auf genormte Hutschienen ermöglicht eine wirtschaftliche Gestaltung unterschiedlicher Anschlüsse, eine große Variabilität der Anschlüsse, eine einfache Montage, Demontage und Veränderung oder Ergänzung der Anschlüsse ohne spezielles Werkzeug sowie eine leichte Auftrennbarkeit der Anschlüsse. Das stabile Basiselement ist mit Aufnahmen für die maßgleichen unterschiedlichen Anschlußmodule und Funktionsbausteine versehen und ist mit Hilfe eines beliebigen Hebels, z.B. Schraubendreher, von der Hutschiene lösbar. Die Anschlußelemente und die jeweiligen Funktionsbausteine sind durch ihre Maßgleichheit beliebig miteinander kombinierbar.

Das basiselement mit den Anschlußelementen und einem jeweiligen Funktionsbaustein kann auch einstückig ausgeführt sein.

Weitere vorteilhafte Ausgestaltungen der Erfindung ergeben sich aus den Unteransprüchen.

Die Erfindung ist nachfolgend anhand eines in den Zeichnungen dargestellten Ausführungsbeispiels einer Anschlußeinrichtung näher erläutert. Es zeigen:
- Fig. 1: die perspektivische Explosionsdarstellung einer Anschlußeinrichtung,
- Fig. 2: die perspektivische Darstellung der Anschlußeinrichtunq gemäß Fig.1 in zusammengebautem Zustand,
- Fig. 3: die Draufsicht auf das Basiselement,
- Fig. 4: die Unteransicht auf das Basiselement,
- Fig. 5: eine geschnittene Seitenansicht des Basis elementes mit angeformtem Federelement,
- Fig. 6: eine Seitenansicht der Kontaktbahn und
- Fig. 7: die Abwicklung der Kontaktbahn nach Fig.6.

Die modular aufgebaute Anschlußeinrichtung bildet eine Schnittstelle zwischen einem Teilnehmer und einer Vermittlungsstelle in einem Fernmelde- oder Datennetz.

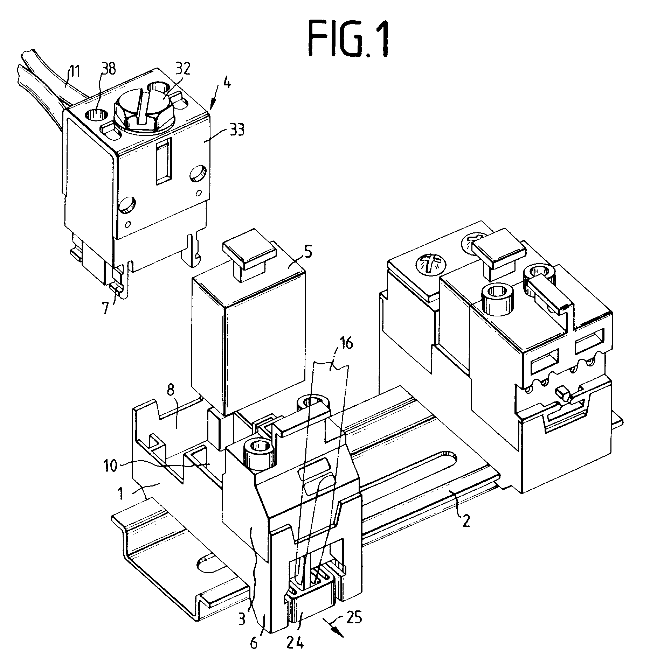

Aus der Fig. 1 ist der modulare Aufbau der Anschlußeinrichtung ersichtlich. Die Anschlußeinrichtung besteht aus einem Basiselement 1, welches über Rastelemente 6 auf eine Tragschiene 2, hier in Form einer genormten Hutschiene, aufgerastet ist, aus einem Anschlußelement 3 für abgehende Kabel, aus einem Anschlußelement 4 für ankommende Kabel und aus einem Funktionsbaustein 5.

Die Anschlußelemente 3,4 sind über Rastelemente 7 in Aufnahmen 8,9 des Basiselementes 1 eingebracht. Die Funktionsbausteine 5 sind jeweils zwischen die Anschlußelemente 3,4 in eine Kammer 10 des Basiselementes 1 eingebracht.

Die Funktionsbausteine 5 sind je nach Anwendung als Überspannungsschutz oder als Ferntesteinrichtung oder als Prüfabgriff, z.B. als RJ-Abgriff o.dgl. ausgebildet.

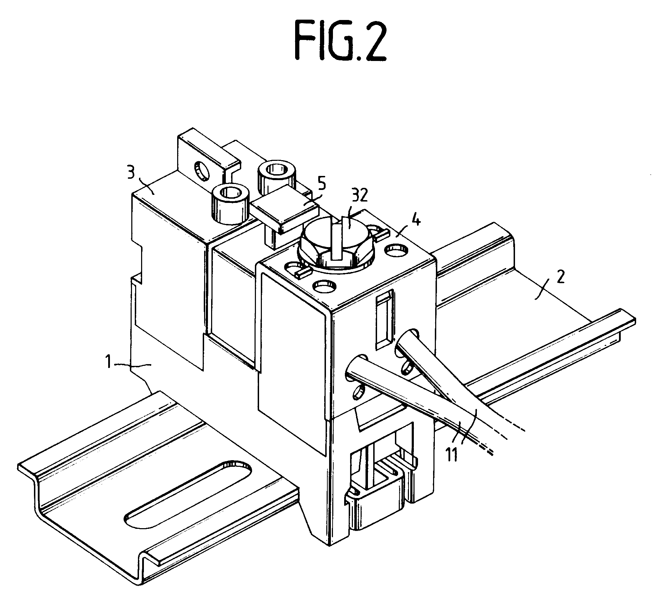

In den Fig. 1 und 2 ist der Anwendungsfall dargestellt, bei dem das Anschlußelement 4 durch ein Dropwire-Modul gebildet ist, welches eine Doppelader eines Dropwire-Kabels 11 mit einer Doppelader eines nicht dargestellten Kupfer-Kabels verbindet. Zwischen den Anschlußelementen 3,4 ist ein Überspannungsschutz als Funktionsbaustein 5 gesteckt.

Weitere Anwendungsfälle können z.B. folgende Module bilden:
- "NID-Modul" (Network-Interface-Device) zum Verbinden einer Doppelader eines Dropwire-Kabels mit zwei Doppeladern eines Kupfer-Kabels (Doppelkontakt) und Parallelschaltung einer Ferntestmeßeinrichtung;
- "NID-Neutral-Modul" zum Verbinden einer Doppelader eines Kupfer-Kabels mit einer Doppelader eines anderen Kupfer-Kabels und Parallelschaltung einer Ferntestmeßeinrichtung;
- "NTD-Modul" zum Verbinden einer Doppelader eines Kupfer-Kabels mit zwei Doppeladern eines Kupfer-Kabels (Doppelkontakt) mit eingesteckter Ferntestmeßeinrichtung sowie RJ-Prüfabgriff;
- "Endverzweiger-Modul" zum Verbinden von zwei Doppeladern eines Kupfer-Kabels mit zwei Doppeladern eines anderen Kupfer-Kabels mit eingestecktem Überspannungsschutz.

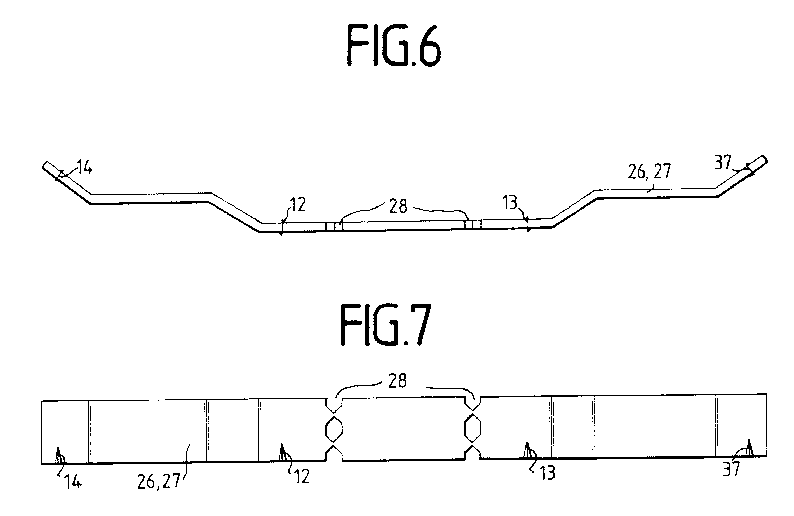

Mit dem Basiselement 1 ist entsprechend der Darstellung in den Fig. 4,5 ein Federelement 15 einstückig verbunden bzw. angeformt, welches über die Hutschiene 2 rastet und mit einem Schraubendreher 16 oder sonstigem geeigneten Gegenstand entriegelt wird, um das auf der Hutschiene 2 eingerastete Basiselement 1 zu entnehmen.

Das Federelement 15 (Fig. 4) dient der Halterung des Basiselementes 1 auf der Hutschiene 2 (Fig.1,2,5). Das Federelement 15 ist gemäß der Darstellung in der Fig. 4 über zwei elastische Wellenelemente 20,21 am Boden 17 des Basiselementes 1 in Aufnahmen 18,19 angeformt (Fig. 4,5). Durch Einstecken des Schraubendrehers 16 in eine Öffnung 22 des Basiselementes 1 und Ankippen des Schraubendrehers 16 in Pfeilrichtung 23 wird ein Halteelement 24 im Basiselement 1 in Pfeilrichtung 25 bewegt und entrastet das Basiselement 1 von der Hutschiene 2 (siehe auch Fig. 1,4).

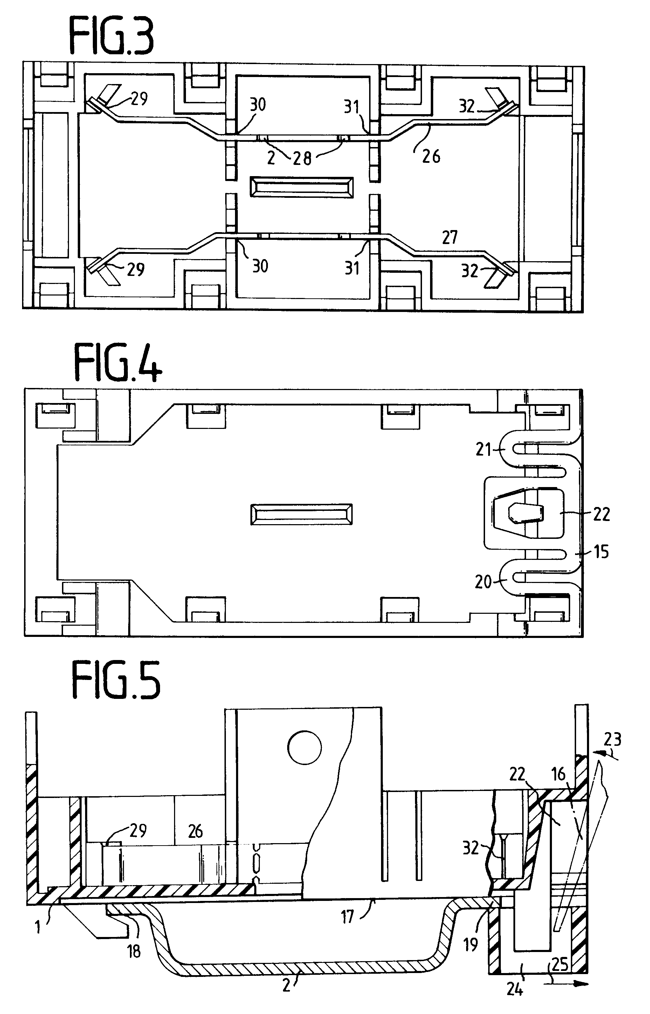

In das Basiselement 1 sind zwei Kontaktbahnen 26,27 entsprechend den Fig. 6,7 in Schlitze 29,30,31,32 entsprechend der Darstellung in Fig. 3 eingesetzt, über welche die elektrische Verbindung zwischen den eingesteckten Anschlußelementen 3,4 und dem jeweils eingesteckten Funktionsbaustein 5 hergestellt wird. Die Kontaktbahnen 26,27 sind im Mittelbereich des Basiselementes 1 so geführt und gestaltet, daß mit einem kleinen Schraubendreher o.dgl. ein Bereich 28 (Fig. 7) herausgebrochen bzw. unterbrochen werden kann, um bei Bedarf einen 5-Punkte-Schutz anstelle eines einfachen Überspannungsschutzes einsetzen zu können.

Die Rastkrallen 12,13,14,37 an den Kontaktbahnen 26,27 greifen jeweils im Bereich der Schlitze 29 bis 32 in den Boden 17 des Basiselementes 1 und gewährleisten einen sicheren Halt der Kontaktbahnen 26,27 (Fig. 3,6).

Die Rastung der Anschlußelemente 3,4 im Basiselement 1 ist in senkrechter Richtung jeweils so ausgeführt, daß der Anschlußbereich der Elemente 3,4 in zwei Endstellungen rastet (nicht dargestellt). In der unteren Raststellung ist die normale Funktion gewährleistet, in der oberen Raststellung ist die Steckverbindung der Elemente 3,4 zur Kontaktbahn 26,27 im Basiselement 1 als Trennstelle benutzbar.

In den Darstellungen nach den Fig. 1,2 ist das Anschlußelement 4 als Dropwire-Anschlußelement ausgeführt. Der im Anschlußbereich verwendete nicht dargestellte Kontakt ist so ausgebildet, daß im oberen Bereich Dropwire-Drähte und in einem unteren zweiten Kontaktbereich auch einfache Kupfer-Adern angeschlossen werden können, so daß ein universeller Einsatz gewährleistet ist. Die Kontaktierung erfolgt in bekannter Weise über ein nicht dargestelltes Druckstück, welches mit einer Schraube 32 bewegt wird. Der Kontakt steht 45° zur Drahtachse. Zur Abdichtung der Kontaktstelle wird das Gehäuse 33 des Anschlußelementes 4 bis zu einem bestimmten Punkt mit einem Gel gefüllt, welches sich beim Bewegen des Druckstückes seitlich um die eingeführte Ader drückt und die Kontaktstelle wasserdicht abdichtet. Zwei Öffnungen 38 im Druckstück (Fig. 1) lassen den Zugang zum Kontakt für Prüfzwecke mit Bananenstecker o.dgl. zu.

Das in den Fig. 1,2 dargestellte Anschlußelement 3 weist einen Anschlußbereich für Kupfer-Adern auf, an den werkzeuglos eine Doppelader angeschlossen werden kann. Die Beschaltung erfolgt mit einem Schraubendreher o.dgl. in bekannter Weise, indem ein nicht dargestellter Kunststoff-Schieber betätigt wird, über den die Kupfer-Adern in den Kontakt gedrückt werden. Für Prüfzwecke kann der Kontakt über Öffnungen abgegriffen werden.

Die Abmessungen beider Anschlußelemente 3,4 sind so gewählt, daß sie gegeneinander ausgetauscht werden können.

Das Anschlußelement 3 kann auch mit zwei Schiebern ausgestaltet sein, um über einen Doppelkontakt zwei Doppeladern parallel beschalten zu können.

Der in den Fig. 1,2 dargestellte Funktionsbaustein 5 ist als in das Basiselement 1 einsteckbarer Überspannungsschutz mittels eines nicht dargestellten Überspannungsableiters zum Schutz der Leitungen ausgestaltet.

Die Anschlußelemente 3,4 und ein jeweiliger Funktionsbaustein 5 können zusammen mit dem Basiselement 1 auch einstückig ausgeführt sein.

### BEZUGSZEICHENLISTE

- 01: Basiselement
- 02: Tragschiene
- 03: Anschlußelement
- 04: Anschlußelement
- 05: Funktionsbaustein
- 06: Rastelement
- 07: Rastelement
- 08: Aufnahme
- 09: Aufnahme
- 10: Kammer
- 11: Dropwire-Kabel
- 12: Rastkralle
- 13: Rastkralle
- 14: Rastkralle
- 15: Federelement
- 16: Schraubendreher
- 17: Boden
- 18: Aufnahme
- 19: Aufnahme
- 20: Wellenelement
- 21: Wellenelement
- 22: Öffnung
- 23: Pfeilrichtung
- 24: Halteelement
- 25: Pfeilrichtung
- 26: Kontaktbahn
- 27: Kontaktbahn
- 28: Solibruchstelle
- 29: Schlitz
- 30: Schlitz
- 31: Schlitz
- 32: Schlitz
- 33: Gehäuse
- 34:
- 35:
- 36:
- 37: Rastkralle
- 38: Öffnung

## Patentansprüche

1. Anschlußeinrichtung für die Fernmelde- und Datentechnik, bestehend aus der Tragschiene, dem Basiselement mit Aufnahmeöffnung und aus Funktionsbausteinen,
**dadurch gekennzeichnet,** daß
das auf die Tragschiene (2) aufrastbare Basiselement (1) Aufnahmen (8,9) für ein Anschlußelement (4) für ankommende Kabel und für ein Anschlußelement (3) für abgehende Kabel aufweist und daß sich zwischen beiden Anschlußelementen (3,4) ein Funktionsbaustein (5) befindet.

2. Anschlußeinrichtung nach Anspruch 1, dadurch gekennzeichnet, daß das Basiselement (1) Schlitze (29 bis 32) zur Aufnahme von Kontaktbahnen (26,27) enthält.

3. Anschlußeinrichtung nach Anspruch 2, dadurch gekennzeichnet, daß die Kontaktbahnen (26,27) Sollbruchstellen (28) aufweisen.

4. Anschlußeinrichtung nach Anspruch 1, dadurch gekennzeichnet, daß das Basiselement (1) ein Federelement (15) in Verbindung mit einem beweglichen Halteelement (24) zur Halterung auf der Tragschiene (2) aufweist.

5. Anschlußeinrichtung nach den Ansprüchen 1 bis 4, dadurch gekennzeichnet, daß das Basiselement (1) mit den Anschlußelementen (3,4) und dem jeweiligen Funktionsbaustein (5) einstückig ausgeführt ist.
